**Europäisches Patentamt**

**European Patent Office**

**Office européen des brevets**

(11) Veröffentlichungsnummer: **0 401 851**
A2.

## (12) EUROPÄISCHE PATENTANMELDUNG

(21) Anmeldenummer: **90110883.7**

(22) Anmeldetag: **08.06.90**

(51) Int. Cl.⁵: **B01J 2/00**

(30) Priorität: **09.06.89 DD 329405**

(43) Veröffentlichungstag der Anmeldung:
**12.12.90 Patentblatt 90/50**

(84) Benannte Vertragsstaaten:
**AT DE FR GB IT NL SE**

(71) Anmelder: **VEB LEUNA-WERKE**

**DDR-4220 Leuna 3(DD)**

(72) Erfinder: **Voigt, Dietrich, Dipl.-Chem., Dr.**
**Bl. 516/2**
**DD-4090 Halle-Neustadt(DD)**
Erfinder: **Gehrke, Günther, Dipl.-Ing.**
**Bl. 284/7**
**DD-4090 Halle-Neustadt(DD)**
Erfinder: **Beckhaus, Wolfgang, Dipl.-Ing.**
**Liebigstrasse 7**
**DD-4220 Leuna-Neustadt(DD)**
Erfinder: **Schmidt, Harald, Dipl.-Chem., Dr.**
**Dürerstrasse 15**
**DD-4200 Merseburg(DD)**
Erfinder: **Heynisch, Eberhard, Dipl.-Ing.**
**M.-Hill-Strasse 33**
**DD-4850 Weissenfels(DD)**
Erfinder: **Schmidt, Eberhard, Dipl.-Ing., Dr.**
**R.-Breitscheid-Strasse 1**
**DD-3280 Genthin(DD)**
Erfinder: **Meinhard, Bernd-Rüdiger, Dipl.-Ing.,
Dr.**
**A.-Gröbler-Strasse 77**
**DD-3280 Genthin(DD)**
Erfinder: **Winkler, Hans-Peter, Dipl.-Ing.**
**R.-Breitscheid-Strasse 4**
**DD-3280 Genthin(DD)**

(74) Vertreter: **Patentanwälte Beetz sen. - Beetz
jun. Timpe - Siegfried - Schmitt-Fumian-
Mayr**
**Steinsdorfstrasse 10**
**D-8000 München 22(DE)**

(54) **Verfahren und Granulierhilfsmittel zur Granulierung von
1,5-Diacetyl-2,4-dioxohexahydro-1,3,5-triazin.**

(57) Die Erfindung betrifft ein Verfahren zur Granulierung von pulverförmigem 1,5-Diacetyl-2,4-dioxohexahydro-1,3,5-triazin (DADHT) mit einem flüssigen Granulierhilfsmittel in der Wirbelschicht zu einem mechanisch stabilen trockenen Granulat. Dazu wird als Granulierhilfsmittel ein Gemisch mit einer Oberflächenspannung bei 298 K von 25 bis 35 mN/m, einer Viskosität bei 298 K von 1,8 bis 2,5 mm²/s und einer Verdunstungszahl, bezogen auf Wasser, von 1,2 bis 1,5 verwendet, das hergestellt ist aus 40 bis 90 Masseteilen einer wäßrigen Lösung mit einem Gehalt von 0,05 bis 0,25 kg/kg brückenbildenden Substanzen und 60 bis 10 Masseteilen einer Tensidlösung mit einem Gehalt von 0,15 bis 0,30 kg/kg waschaktiver Substanz.

EP 0 401 851 A2

EP 0 401 851 A2

## Verfahren und Granulierhilfsmittel zur Granulierung von 1,5-Diacetyl-2,4-dioxohexahydro-1,3,5-triazin

Die Erfindung betrifft ein Verfahren sowie Granulierhilfsmittel zur Herstellung von Granulaten aus pulverförmigen 1,5-Diacetyl-2,4-dioxohexahydro-1,3,5-triazin (DADHT). Das granulierte DADHT wird als Aktivator Waschmittelkompositionen mit peroxidischen Bleichmitteln zugesetzt, damit diese bereits bei einer Temperatur ab 300 K eine hohe Bleich- und Desinfektionswirkung erreichen.

DADHT fällt bei der technischen Herstellung nur als Pulver mit einer Korngröße von weniger als 0,1 mm an. In dieser Form in Waschmitteln eingesetztes DADHT wird bei ihrer Lagerung innerhalb kürzester Zeit nahezu quantitativ hydrolysiert und damit beim Waschprozeß unwirksam.

Für die Granulierung von Bleichmittelaktivatoren wurden bereits eine Anzahl Verfahren beschrieben, wie die Kompaktierung im trockenen und feuchten Zustand, die Sprühtrocknung von Suspensionen und Lösungen sowie die Wirbelschichtgranulierung. Diese Verfahren sind überwiegend durch eine Reihe technologisch notwendiger Schritte arbeitsaufwendig, ohne daß sie ein allen Anforderungen genügendes Granulat liefern. Bezüglich der Oberfläche des Granulats, der Menge des zu verdampfenden Wassers und der Herstellung eines eng begrenzten Korngrößenspektrums stellt die Wirbelschichtgranulierung von DADHT-Pulver mit einem flüssigen Granulierhilfsmittel eine vorteilhafte technische Lösung dar (DD-A-255 880, DD-A-255 881).

Allerdings ist die Wirbelschichtgranulierung mit einer Anzahl von gleichzeitig und hintereinander ablaufenden Prozessen auch ein schwierig zu beherrschendes Verfahren. Um das Verfahren kontinuierlich sicher betreiben zu können, werden in das Granulat große Mengen brückenbildender Substanzen und Gerüstsubstanzen eingearbeitet, so daß der Wirkstoffgehalt meist bei 0,60 kg/kg liegt. Werden als Brückenbildner Tenside verwendet, sind die Granulate weich und klebrig und verformen sich unter Druck. Durch den Zusatz von Gerüstsubstanzen, vor allem von Phosphaten, wird dieser Erscheinung entgegengewirkt, ohne sie vollständig unterdrücken zu können, und der Wirkstoffgehalt der Granulate wird weiter erniedrigt. Ein Phosphatzusatz ist darüber hinaus aus ökologischen Gründen unerwünscht.

Die Verwendung eines als DHT-Filtrat bezeichneten Granulierhilfsmittels (DD-A-255 884, DD-A-255 881) für die Wirbelschichtgranulierung von DADHT führt zwar zu einem festen, trockenen Granulat, gestattet aber keine kontinuierliche Verfahrensführung, da eine Sprühtrocknung des Granulierhilfsmittels eintritt. Die dabei entstehenden Produkte verkleben den Siebboden des Granulators, so daß Unterbrechungen des Granulierprozesses erzwungen werden.

Aufgabe der Erfindung ist es, ein Verfahren sowie Granulierhilfsmittel zur Wirbelschichtgranulierung von DADHT anzugeben, die eine störungsfreie, kontinuierliche Agglomerierung zu einem mechanisch stabilen, trockenen Granulat mit einem hohen Wirkstoffgehalt und mit minimalem Energieaufwand gestatten.

Die Aufgabe wird anspruchsgemäß gelöst.

Das erfindungsgemäße Verfahren zur Granulierung von 1,5-Diacetyl-2,4-dioxohexahydro-1,3,5-triazin-Pulver mit einem flüssigen Granulierhilfsmittel in der Wirbelschicht bei erhöhter Temperatur ist dadurch gekennzeichnet, daß als Granulierhilfsmittel ein Gemisch mit einer Oberflächenspannung von 25 bis 35 mN/m bei 293 K, einer Viskosität von 1,8 bis 2,5 mm$^2$/s bei 298 K und einer Verdunstungszahl von 1,2 bis 1,5 gegenüber Wasser, hergestellt aus 40 bis 90 Masseteilen einer wäßrigen Lösung mit einem Abdampfrückstand von 0,25 bis 0,50 kg/kg, wovon 0,05 bis 0,25 kg/kg brückenbildende Substanzen sind, sowie 60 bis 10 Masseteilen einer Tensidlösung mit einem Gehalt von 0,15 bis 0,30 kg/kg waschaktiver Substanz, wobei die Summe der Masseteile beider Bestandteile im Gemisch jeweils 100 beträgt, verwendet wird, die vorzugsweise in die Wirbelschicht eingesprüht wird.

Das als Granulierhilfsmittel verwendete Gemisch soll einen Abdampfrückstand bei 393 K von vorzugsweise 0,20 bis 0,40 kg/kg und insbesondere von 0,25 bis 0,35 kg/kg besitzen. Eine Einstellung eines solchen Abdampfrückstands ist neben der Mischung von Lösungen geeigneter Konzentration auch durch Zugabe von Wasser möglich.

Als brückenbildende Substanzen werden in der wäßrigen Lösung Substanzen, wie beispielsweise Harnstoff-Formaldehyd-Kondensationsprodukte, die bei einem Harnstoff-Formaldehyd-Verhältnis von 1 zu 0,3 und bei Temperaturen von 353 bis 373 K sowie einem pH-Wert von 6 bis 8 gebildet werden, Carboxymethylcellulose, Silicate, Wasserglas und/oder Harnstoff eingesetzt. Zur Erhöhung des Abdampfrückstands dieser Teilkomponente des Granulierhilfsmittels werden Stoffe, wie beispielsweise Natriumsulfat, Harnstoffe, Cyanursäure, 2,4-Dioxohexahydro-1,3,5-triazin oder Phosphate, die die Löslichkeit der brückenbildenden Substanzen als auch die des Granulats günstig beeinflussen, eingesetzt. Die Viskosität, bestimmt bei 298 K, dieser Teilkomponente des Granulierhilfsmittels sollte bei 2,0 mm$^2$/s, die Oberflächenspannung, gemessen bei 298 K, bei 65 mN/m und die Verdunstungszahl, bezogen auf Wasser, bei 1,1 liegen.

Als brückenbildende Substanz wird vorzugsweise ein als DHT-Filtrat bezeichnetes Produkt eingesetzt, welches bei der Kondensation von Harnstoff mit Formalin zu 2,4-Dioxohexahydro-1,3,5-triazin (DHT) bei einem Harnstoff-Formalin-Verhältnis von 1 zu 0,3 und bei Temperaturen von 353 bis 373 K sowie einem pH-Wert von 6 bis 8 nach der DHT-Isolierung anfällt. Es ist eine wäßrige Lösung oder Suspension mit Harnstoff-Formaldehyd-Kondensaten, Methylenbisharnstoff, Harnstoff, Biuret, Cyanursäure und DHT als Inhaltsstoffen. Eine nähere Charakterisierung der Herstellung von DHT ist in DD-A-229 692 und des DHT-Filtrats in DD-A-255 884 angegeben.

Als Tenside werden vorzugsweise wäßrige Lösungen von Natriumalkylbenzolsulfonaten mit einem Alkylrest von $C_8$ bis $C_{16}$, insbesondere $C_{12}$, Natriumalkansulfonate mit Alkylresten der Kettenlänge $C_{12}$ bis $C_{20}$, insbesondere $C_{15}$, oder ethoxylierte Fettalkohole einer Kettenlänge von $C_{10}$ bis $C_{16}$ und einer EO-Anzahl von 8 bis 12 eingesetzt. Die Viskosität dieser Tensidlösungen, bestimmt bei 298 K, sollte zwischen 5 bis 150 $mm^2$/s, die Oberflächenspannung bei 298 K unter 30 mN/m und die Verdunstungszahl bei mindestens 0,9 liegen. Wenn diese Lösungen nicht neutral reagieren, muß ihr pH-Wert auf unter 10 eingestellt werden. Für das erfindungsgemäße Verfahren können technisch zugängliche Tenside mit technologisch bedingten Gehalten an Salzen und Neutralsubstanzen eingesetzt werden.

Die Einstellung der notwendigen Oberflächenspannung, Viskosität bzw. Verdunstungszahl für das Granulierhilfsmittel erfolgt durch die Wahl der Konzentration und/oder die Kombination der brückenbildenden und tensidartigen Substanzen. So kann die Viskosität durch die bevorzugte Verwendung von Natriumalkylbenzolsulfonaten mit Alkylresten im Bereich von $C_8$ bis $C_{16}$ erhöht und durch bevorzugten Einsatz von Natriumalkylsulfonaten mit durchschnittlichen C-Zahlen von ca. 15 verringert werden.

Für die Einstellung der notwendigen Oberflächenspannung ist das Verhältnis zwischen dem Feststoff aus der wäßrigen Lösung mit den brückenbildenden Substanzen und den Tensiden zu variieren. Mit ansteigendem Tensidanteil wird die Oberflächenspannung vermindert. Die Verdunstungszahl wird durch Verringerung des Abdampfrückstandes des Granulierhilfsmittels und/oder Erhöhung des Tensidanteils im Abdampfrückstand zu höheren Werten hin verschoben.

Die für das Granulierhilfsmittel verwendeten wäßrigen Lösungen werden auf bekannte Art in einem Rührbehälter chargenweise vorgemischt oder kontinuierlich in einer Mischstrecke vor der Verdüsung in der Wirbelkammer zusammengeführt. Für eine schnelle Homogenisierung ist eine Temperatur der Ausgangslösungen bzw. der hergestellten Mischungen von 293 bis 335 K zweckmäßig.

Das Verhältnis zwischen DADHT-Pulver und dem Granulierhilfsmittel ist oberhalb eines Mindestanteils Feststoff aus dem Granulierhilfsmittel im Granulat von 5 Masseteilen in % (Masse-%) frei wählbar entsprechend dem im Granulat gewünschten Anteil an Bleichmittelaktivator. Vorzugsweise werden auf 200 bis 400 Masseteile DADHT-Pulver 100 Masseteile der Granulierhilfsmittel-Mischung eingesetzt.

Nach dem erfindungsgemäßen Verfahren lassen sich die in der Wirbelschicht hergestellten Granulate bei Ablufttemperaturen (gemessen zwischen Granulator und Zyklon) von mindestens 315 K bis zu einem Wassergehalt (bestimmt als flüchtige Komponenten bei 378 K) von maximal 0,01 kg/kg und überwiegend bis zu 0,005 bis 0,008 kg/kg trocknen, wodurch die chemische Stabilität der Granulate gesteigert wird.

Das Korngrößenspektrum des nach dem erfindungsgemäßen Verfahren hergestellten Granulats läßt sich durch eine zum Stand der Technik gehörende Gestaltung des klassierenden Austrags des Wirbelschichtapparates weitestgehend frei einstellen. Die Herstellung eines Granulats mit einem engen Korngrößenspektrum für die Einarbeitung in ein Waschmittel, beispielsweise im Korngrößenbereich 0,5 bis 1,6 mm, bereitet keine Schwierigkeiten.

Die analytische Kontrolle des Granulierprozesses erfolgt durch die Bestimmung der Wirksubstanz im DADHT-Pulver und -Granulat mittels HPLC und/oder nach der sog. Perboratmethode durch jodometrische Titration der bei der Hydrolyse des DADHT mit Wasserstoffperoxid bei 25 °C und pH 9 freigesetzten Peressigsäure. Die Oberflächenspannung wird mittels Bügel- oder Ringverfahren und die Viskosität mit Kapillarviskosimetern in bekannter Weise bestimmt. Die Verdunstungszahl ist als Quotient aus der Menge des aus dem Granulierhilfsmittel verdampften Wassers (in %, bezogen auf Gesamt-$H_2O$) und dem Masseverlust von destilliertem Wasser (in %) unter vergleichbaren Bedingungen bezüglich Temperatur, Oberfläche und Luftzirkulation definiert. Zur Ermittlung der Lagerbeständigkeit wurde ein sog. Kurzzeitlagertest auf der Basis der Einarbeitung des Granulats in ein Waschmittel und dessen Lagerung bei 313 K und 80 % rel. Luftfeuchtigkeit durchgeführt und der Verlust an DADHT während dieser Lagerung ermittelt.

Die folgenden Ausführungsbeispiele erläutern die Erfindung.

**Beispiele 1 bis 8**

In einem Wirbelschichtapparat mit einem Siebbodendurchmesser von 400 mm, ausgerüstet mit Anstaukammer für die Bodenluft, Beruhigungszone, zentral angeordnetem und mit drehbarer Verschlußklappe versehenem Austragrohr, Abschluß der Pulverströme gegenüber der Apparatur mit Zellradschleusen, Staubabscheidung aus der Abläuft mit Zyklon und Filter und Recycling der abgeschiedenen Stäube über die Eintragsluft, wurde staubförmiges DADHT-Pulver mit 50 m³/h Luft tangential eingeblasen. Gleichzeitig wurde über eine zentral in einer Höhe von 450 mm über der Wirbelschicht angeordnete Feststoffdüse Granulierhilfsmittel mit Hilfe von 20 m³/h Luft eingesprüht. 400 m³/h auf 462 K erhitzte Luft traten durch den Siebboden in die Wirbelschicht ein und als Abluft mit einer Temperatur von 331 K, gemessen in der Beruhigungszone, aus. Aus der Wirbelschicht wurde über das Austragrohr bei einer Luftströmung von 120 m³/h das Granulat ausgetragen. Die Einsatzmengen und Ergebnisse für die Beispiele 1 bis 8 sind in den Tabellen 1 und 2 zusammengestellt.

**Beispiele 9 bis 11**

Die Beispiele 9 bis 11 wurden in einem Wirbelschichtgranulator analog Beispiel 1, jedoch mit einem Siebbodendurchmesser von 1200 mm und einer Bodenluftströmung von 6000 m³ i.N./h sowie einer Summe von Eintrags- und Austragsluftmenge und Druckluft zum Versprühen des Granulierhilfsmittels von 1500 m³ i.N./h realisiert. Die Einsatzmengen und Eigenschaften sowie die Ergebnisse dieser Beispiele sind in Tabelle 2 zusammengefaßt.

In den Tabellen 1 und 2 sind folgende Bezeichnungen bzw. Abkürzungen verwendet:

DADHT-Gehalt: Nach der Perboratmethode ermittelter Gehalt

Restfeuchte : Gehalt an flüchtigen Substanzen bei 378 K über 2 h

Feststoffgehalt: Abdampfrückstand bei 393 K

Kurzzeitlagertest: 14 Tage bei 313 K und 80 rel. Luftfeuchtigkeit

DHT-F: Filtrat bei der Herstellung von 2,4-Dioxohexahydro-1,3,5-triazin

H/F: Wäßrige Lösung von Harnstoff-Formaldehyd-Kondensationsprodukten und Harnstoff

Rod: Wäßrige Lösung von Natriumalkylbenzolsulfonat, durchschnittliche Kettenlänge $C_{12}$ (Handelsprodukt Rodapon N-50 - VEB Deutsches Hydrierwerk Rodleben)

E-30: Wäßrige Lösung von Natriumalkansulfonat, durchschnittliche Kettenlänge $C_{15}$ (Handelsprodukt E-30, VEB Leuna-Werke)

Präw: Wäßrige Lösung von Ethoxylaten von Fettalkoholen, durchschnittliche Kettenlänge der Fettalkohole $C_{12}$, durchschnittlich 10 Ethoxy-Gruppen (Handelsprodukt Präwozell - VEB Chemische Werke Buna)

Tabelle 1

| Beispiel | 1 | 2 | 3 | 4 | 5 |
|---|---|---|---|---|---|
| Granulator | | | | | |
| Siebboden-∅ (mm) | 400 | 400 | 400 | 400 | 400 |
| DADHT-Pulver | | | | | |
| DADHT-Gehalt (kg/kg) | 0,932 | 0,932 | 0,932 | 0,884 | 0,960 |
| Menge (kg/h) | 43,5 | 45,6 | 42,4 | 34,5 | 34,4 |
| Granulierhilfsmittel | | | | | |
| Menge (kg/h) | 25,1 | 18,4 | 14,9 | 14,1 | 28,7 |
| Feststoff-gehalt (kg/kg) | 0,335 | 0,404 | 0,360 | 0,356 | 0,250 |
| Viskosität ($mm^2$/s) | 2,13 | 2,12 | 2,40 | 2,27 | 1,8 |
| Oberflächensp. (mN/m) | 31,8 | 33,8 | 30,1 | 31,1 | 30,4 |
| Verdunstungszahl | 1,28 | 1,26 | 1,24 | 1,22 | 1,27 |
| pH-Wert | 7,9 | 8,1 | 8,0 | 7,8 | 7,9 |
| Komponente I | DHT-F | DHT-F | DHT-F | DHT-F | DHT-F |
| Feststoffgeh. (kg/kg) | 0,422 | 0,422 | 0,422 | 0,412 | 0,355 |
| brückenbildend (kg/kg) | 0,197 | 0,197 | 0,197 | 0,123 | 0,108 |
| Komponente II | Rod | Rod | Rod | E-30 | E-30 |
| Feststoffgeh. (kg/kg) | 0,248 | 0,248 | 0,248 | 0,271 | 0,271 |
| WAS (kg/kg) | 0,223 | 0,223 | 0,223 | 0,241 | 0,241 |
| sowie Wasser Ma.-T. | - | - | - | - | 27,9 |
| Verhältnis I/II (Masseteile) | 1:1 | 9:1 | 7:3 | 6:4 | 65:28 |
| Granulierbedingungen | | | | | |
| Temp. Bodenluft (K) | 462 | 433 | 431 | 463 | 454 |
| Abluft (K) | 331 | 325 | 321 | 333 | 334 |
| Granulat | | | | | |
| DADHT-Gehalt (kg/kg) | 0,775 | 0,801 | 0,822 | 0,767 | 0,789 |
| Restfeuchte (kg/kg) | 0,0076 | 0,0082 | 0,0064 | 0,0050 | 0,0059 |

Fortsetzung Tabelle 1

| Beispiel | 1 | 2 | 3 | 4 | 5 |
|---|---|---|---|---|---|
| Korngrößenverteilung | | | | | |
| (kg/kg)    1,6 mm | 0,065 | 0,024 | 0,084 | 0,167 | 0,066 |
| 0,5-1,6 mm | 0,934 | 0,904 | 0,884 | 0,818 | 0,907 |
| 0,5 mm | 0,001 | 0,072 | 0,032 | 0,015 | 0,027 |
| chemische Beständigkeit | | | | | |
| nach Kurzzeitlagertest | | | | | |
| DADHT-Verlust (%) | 8,8 | 9,4 | 7,3 | 6,5 | 7,2 |

Tabelle 2

| Beispiel | 6 | 7 | 8 | 9 | 10 | 11 |
|---|---|---|---|---|---|---|
| Granulator | | | | | | |
| Siebboden-Ø (mm) | 400 | 400 | 400 | 1200 | 1200 | 1200 |
| DADHT-Pulver | | | | | | |
| DADHT-Gehalt (kg/kg) | 0,932 | 0,932 | 0,932 | 0,920 | 0,920 | 0,920 |
| Menge (kg/h) | 42,8 | 42,8 | 42,8 | 481 | 481 | 481 |
| Granulierhilfsmittel | | | | | | |
| Menge (kg/h) | 20,5 | 20,5 | 16,8 | 123,1 | 134,7 | 110,6 |
| Feststoffgehalt (kg/kg) | 0,258 | 0,273 | 0,266 | 0,303 | 0,319 | 0,308 |
| Viskosität (mm²/s) | 2,50 | 2,43 | 2,25 | 1,89 | 2,43 | 2,36 |
| Oberflächensp. (mN/m) | 30,5 | 30,0 | 31,0 | 31,0 | 30,0 | 30,4 |
| Verdunstungszahl | 1,32 | 1,30 | 1,26 | 1,25 | 1,26 | 1,28 |
| pH-Wert | 6,8 | 6,8 | 7,2 | 8,0 | 7,8 | 7,2 |
| Komponente I | H/F | H/F | H/F | DHT-F | DHT-F | DHT-F |
| Feststoffgehalt (kg/kg) | 0,282 | 0,282 | 0,282 | 0,348 | 0,348 | 0,348 |
| brückenbildend (kg/kg) | 0,052 | 0,052 | 0,052 | 0,136 | 0,136 | 0,136 |

Fortsetzung Tabelle 2

| Beispiel | 6 | 7 | 8 | 9 | 10 | 11 |
|---|---|---|---|---|---|---|
| Komponente II | Rod | E-30 | Präw | Rod | E-30 | Präw |
| Feststoffgehalt (kg/kg) | 0,223 | 0,190 | 0,204 | 0,236 | 0,250 | 0,216 |
| WAS (kg/kg) | 0,199 | 0,185 | 0,200 | 0,218 | 0,232 | 0,198 |
| Verhältnis I/II (Masseteile) | 6:4 | 7:3 | 8:2 | 6:4 | 7:3 | 7:3 |
| Granulierbedingungen | | | | | | |
| Temp. Bodenluft (K) | 467 | 461 | 465 | 425 | 427 | 427 |
| Abluft (K) | 337 | 332 | 334 | 324 | 325 | 326 |
| Granulat | | | | | | |
| DADHT-Gehalt (kg/kg) | 0,824 | 0,818 | 0,837 | 0,846 | 0,838 | 0,852 |
| Restfeuchte (kg/kg) | 0,0064 | 0,0071 | 0,0083 | 0,0078 | 0,0076 | 0,0082 |
| Korngrößenverteilung | | | | | | |
| (kg/kg)        1,6 mm | 0,062 | 0,089 | 0,103 | 0,087 | 0,088 | 0,096 |
| 0,5-1,6 mm | 0,884 | 0,902 | 0,858 | 0,847 | 0,902 | 0,851 |
| 0,5 mm | 0,054 | 0,009 | 0,039 | 0,066 | 0,010 | 0,053 |
| chemische Beständigkeit nach Kurzzeitlagertest | | | | | | |
| DADHT-Verlust (%) | 9,6 | 10,1 | 7,4 | 7,8 | 9,6 | 8,2 |

**Ansprüche**

1. Verfahren zur Granulierung von pulverförmigem 1,5-Diacetyl-2,4-dioxohexahydro-1,3,5-triazin (DADHT) mit einem flüssigen Granulierhilfsmittel, welches brückenbildende Substanzen enthält, in der Wirbelschicht bei erhöhter Temperatur,
dadurch gekennzeichnet,
daß ein Gemisch mit einer Oberflächenspannung von 25 bis 35 mN/m bei 290 K, einer Viskosität von 1,8 bis 2,5 mm²/s bei 298 K und einer Verdunstungszahl gegenüber Wasser von 1,2 bis 1,5, bestehend aus 40 bis 90 Masseteilen einer wäßrigen Lösung mit einem Abdampfrückstand von 0,25 bis 0,50 kg/kg, wovon 0,05 bis 0,25 kg/kg brückenbildende Substanzen sind und 60 bis 10 Masseteilen einer Tensidlösung mit einem Gehalt an waschaktiver Substanz von 0,15 bis 0,30 kg/kg, wobei die Summe der Masseteile beider Komponenten im Gemisch 100 beträgt, als Granulierhilfsmittel in die Wirbelschicht eingesprüht wird.

2. Verfahren nach Anspruch 1, dadurch gekennzeichnet, daß das Gemisch einen Abdampfrückstand bei 393 K von 0,20 bis 0,40 kg/kg aufweist.

3. Verfahren nach Anspruch 1 oder 2, dadurch gekennzeichnet, daß das Gemisch einen Abdampfrückstand bei 393 K von 0,25 bis 0,35 kg/kg aufweist.

4. Verfahren nach einem der Ansprüche 1 bis 3, dadurch gekennzeichnet, daß als brückenbildende Substanzen Harnstoff-Formaldehyd-Kondensationsprodukte, Carboxymethylcellulose, Wasserglas und/oder Harnstoff eingesetzt werden.

5. Verfahren nach einem der Ansprüche 1 bis 4, dadurch gekennzeichnet, daß die die brückenbildende Substanz enthaltende wäßrige Lösung Natriumsulfat, Harnstoff, Cyanursäure, 2,4-Dioxohexahydro-1,3,5-triazin und Phosphate einzeln oder im Gemisch enthält.

6. Verfahren nach einem der Ansprüche 1 bis 5, dadurch gekennzeichnet, daß als brückenbildende Substanz ein bei der Kondensation von Harnstoff mit Formalin zu 2,4-Dioxohexahydro-1,3,5-triazin (DHT) bei einem Harnstoff/Formalin-Verhältnis von 1:0,3, Temperaturen von 353 bis 373 K sowie einem pH-Wert von 6 bis 8 nach der DHT-Abtrennung anfallendes Filtrat eingesetzt wird.

7. Granulierhilfsmittel zur Granulierung von pulverförmigem 1,5-Diacetyl-2,4-dioxohexahydro-1,3,5-triazin (DADHT) in der Wirbelschicht bei erhöhter Temperatur, insbesondere zur Durchführung des Verfahrens nach einem der Ansprüche 1 bis 6,
mit einem Gehalt an brückenbildenden Substanzen,
gekennzeichnet durch
ein Gemisch aus
(A) 40 bis 90 Masseteilen einer wäßrigen Lösung mit einem Abdampfrückstand von 0,25 bis 0,50 kg/kg, wovon 0,05 bis 0,25 kg/kg brückenbildende Substanzen sind,
und
(B) 10 bis 60 Masseteilen einer Tensidlösung mit einem Gehalt an waschaktiver Substanz von 0,15 bis 0,30 kg/kg,
wobei die Summe der Mengen der Komponenten A und B 100 Masseteile beträgt,
das eine Oberflächenspannung bei 298 K von 25 bis 35 mN/m, eine Viskosität bei 298 K von 1,8 bis 2,5 mm$^2$/s und eine Verdunstungszahl gegenüber Wasser von 1,2 bis 1,5 aufweist.

8. Granulierhilfsmittel nach Anspruch 7, dadurch gekennzeichnet, daß es einen Abdampfrückstand bei 393 K von 0,20 bis 0,40 kg/kg und vorzugsweise von 0,25 bis 0,35 kg/kg aufweist.

9. Granulierhilfsmittel nach Anspruch 7 oder 8, dadurch gekennzeichnet, daß es als brückenbildende Substanzen A Harnstoff-Formaldehyd-Kondensationsprodukte, Carboxymethylcellulose, Wasserglas, Harnstoff und/oder ein bei der Kondensation von Harnstoff mit Formalin zu 2,4-Dioxohexahydro-1,3,5-triazin (DHT) bei einem Harnstoff/Formalin-Verhältnis von 1:0,3, Temperaturen von 353 bis 373 K sowie einem pH-Wert von 6 bis 8 nach der DHT-Abtrennung anfallendes Filtrat enthält.

10. Granulierhilfsmittel nach einem der Ansprüche 7 bis 9, dadurch gekennzeichnet, daß es Natriumsulfat, Harnstoff, Cyanursäure, 2,4-Dioxohexahydro-1,3,5-triazin und/oder Phosphate enthält.

11. Granulate von 1,5-Diacetyl-2,4-dioxohexahydro-1,3,5-triazin, erhältlich nach dem Verfahren nach einem der Ansprüche 1 bis 6.